(19) Europäisches Patentamt / European Patent Office / Office européen des brevets

(11) **EP 4 361 742 A1**

(12) **EUROPEAN PATENT APPLICATION**
published in accordance with Art. 153(4) EPC

(43) Date of publication:
**01.05.2024   Bulletin 2024/18**

(21) Application number: **22827976.6**

(22) Date of filing: **17.03.2022**

(51) International Patent Classification (IPC):
**G05B 19/05** $^{(2006.01)}$

(52) Cooperative Patent Classification (CPC):
**G05B 19/05**

(86) International application number:
**PCT/JP2022/012260**

(87) International publication number:
**WO 2022/270056 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2021   JP 2021103097**

(71) Applicant: **OMRON Corporation
Kyoto 600-8530 (JP)**

(72) Inventors:
• **NAGABAYASHI, Yosuke
  Kyoto-shi, Kyoto 600-8530 (JP)**
• **FUJII, Takashi
  Kyoto-shi, Kyoto 600-8530 (JP)**
• **KAWANOUE, Shinsuke
  Kyoto-shi, Kyoto 600-8530 (JP)**

(74) Representative: **Mewburn Ellis LLP
Aurora Building
Counterslip
Bristol BS1 6BX (GB)**

(54) **PREDICTION SYSTEM, INFORMATION PROCESSING DEVICE, AND INFORMATION PROCESSING PROGRAM**

(57)     A prediction system according to an aspect includes a control operation unit configured to execute a control operation for controlling a control target, a predicted value acquisition unit configured to acquire a predicted value by inputting, to a prediction model, a process value including one or a plurality of state values among state values that can be referenced by the control operation unit, a prediction model generation unit configured to generate the prediction model on a basis of a tree learning algorithm, and a prediction model evaluation unit configured to evaluate the prediction model. The prediction model evaluation unit includes an execution time acquisition unit configured to acquire each of first and second execution times that are times taken for outputting the predicted value in response to input of first and second data to the prediction model, a maximum execution time calculation unit configured to calculate a maximum execution time of the prediction model on the basis of the first and second execution times acquired by the execution time acquisition unit, and an evaluation unit configured to evaluate the prediction model on the basis of a calculation result from the maximum execution time calculation unit.

FIG.11

PREDICTION MODEL ACQUISITION UNIT — 251

EXECUTION TIME ACQUISITION UNIT — 252

MAXIMUM EXECUTION TIME CALCULATION UNIT — 254

EVALUATION UNIT — 256

250

EP 4 361 742 A1

## Description

### TECHNICAL FIELD

The present disclosure relates to a prediction system that predicts a change occurring in a control target, an information processing device constituting the prediction system, and an information processing program for implementing the information processing device.

### BACKGROUND ART

Examples of a controller used to control the operation of machinery, equipment, or the like includes a general-purpose PLC and a program-controlled controller exclusively used for specific machinery or the like.

Such a PLC includes, for example, a plurality of units such as a central processing unit (CPU) including a microprocessor that executes a control program, and an input output (IO) unit responsible for signal input from an external switch or sensor and signal output to an external relay or actuator. The PLC executes the control operation while exchanging data over a PLC system bus and/or a field network with the units at each control program execution cycle.

A controller support device is used to create the control program to be executed by the controller and various types of configuration information for the controller and transfer the control program and the various types of configuration information to the controller. The controller support device is implemented by, for example, a general-purpose computer having a controller support program installed therein. The controller support device has, for example, an editor function of creating a source list of the control program, a compiler function of generating, from the source list of the control program, an object program that runs on the controller, a controller simulator function of test-running the control program on the controller support device, a function of communicating with the controller, and the like.

In the phase of developing the control program, it is necessary to know an execution time required for the controller to execute the control program. To determine an execution cycle period of the control program, the execution time of the control program is referenced. Further, to determine execution priorities and execution cycle periods of a plurality of control programs to be executed by the controller, the execution priorities and the execution cycle periods being different from each other, the execution time of each control program is referenced.

The controller support device and the controller are, in many cases, different from each other in hardware or operation system pertaining to the execution of the control program. Similarly, an execution code of the control program itself may be different between an execution code for the simulator and an execution code for the controller. Therefore, the execution time of the control program executed on the simulator of the controller support device may be different from the execution time of the control program executed on the controller, and various methods have been proposed (see Japanese Patent Laying-Open No. 2012-194669).

### CITATION LIST

#### PATENT LITERATURE

PTL 1: Japanese Patent Laying-Open No. 2012-194669

### SUMMARY OF INVENTION

#### TECHNICAL PROBLEM

On the other hand, for a method for building a variable prediction model using machine learning for control, an inference execution time varies in a manner that depends on input data, so that the method has a problem that the maximum execution time is unknown. It is therefore necessary to measure the execution time by repeating inference execution many times with the prediction model deployed on a device, and there is a problem that it takes time and effort to evaluate the prediction model.

It is therefore an object of the present disclosure to provide a method that allows a prediction model to be evaluated in a simpler manner.

#### SOLUTION TO PROBLEM

A prediction system according to an aspect includes a control operation unit configured to execute a control operation for controlling a control target, a predicted value acquisition unit configured to acquire a predicted value by inputting, to a prediction model, a process value including one or a plurality of state values among state values that can be referenced by the control operation unit, a prediction model generation unit configured to generate the prediction model on a basis of a tree learning algorithm, and a prediction model evaluation unit configured to evaluate the prediction model. The prediction model evaluation unit includes an execution time acquisition unit configured to acquire each of first and second execution times that are times taken for outputting the predicted value in response to input of first and second data to the prediction model, a maximum execution time calculation unit configured to calculate a maximum execution time of the prediction model on the basis of the first and second execution times acquired by the execution time acquisition unit, and an evaluation unit configured to evaluate the prediction model on the basis of a calculation result from the maximum execution time calculation unit. This configuration allows the prediction system to calculate the maximum execution time of the prediction model and evaluate, in a simple manner, the prediction model on the basis of the calculation result.

The maximum execution time calculation unit calculates a unit execution time for a unit processing count on the basis of a difference between the first and second execution times and a difference between a processing count for the first execution time and a processing count for the second execution time, and calculates the maximum execution time on the basis of a maximum processing count and the unit execution time. This configuration causes the prediction system to calculate the maximum execution time on the basis of the difference in processing count, the maximum processing count, and the unit execution time. It is therefore possible to evaluate the prediction model in a simple manner.

The prediction model executes a plurality of prediction processes on input data. The maximum execution time calculation unit calculates the processing counts for the first and second execution times on the basis of a sum of respective processing counts of the plurality of prediction processes, and calculates the maximum processing count on the basis of a sum of respective maximum processing counts of the plurality of prediction processes. This configuration causes the prediction system to calculate the maximum execution time on the basis of the sum of the processing count and the maximum processing count of each prediction process. It is therefore possible to evaluate the prediction model in a simple manner.

The prediction model is generated on the basis of a decision tree learning algorithm using random forest. With this configuration, it is possible to implement a prediction system with high accuracy. The evaluation unit evaluates the prediction model on the basis of a comparison between a predetermined control task period and the maximum execution time. This configuration allows the prediction model to be evaluated in a simple manner.

An adjustment unit capable of adjusting a parameter of the prediction model is further included. The prediction model generation unit generates a plurality of the prediction models in accordance with the adjustment to the parameter made by the adjustment unit. The prediction model evaluation unit evaluates each of the plurality of prediction models, and further includes an evaluation result output unit configured to output results of evaluation of the plurality of prediction models. This configuration allows the prediction model to be evaluated in a simple manner.

An information processing device according to an aspect is an information processing device connected to a control device, and the control device includes a control operation unit configured to execute a control operation for controlling a control target, and a predicted value acquisition unit configured to acquire a predicted value by inputting, to a prediction model, a process value including one or a plurality of state values among state values that can be referenced by the control operation unit. The information processing device includes a prediction model generation unit configured to generate the prediction model on the basis of a tree learning algorithm, and a prediction model evaluation unit configured to evaluate the prediction model. The prediction model evaluation unit includes an execution time acquisition unit configured to acquire each of first and second execution times that are times taken for outputting the predicted value in response to input of first and second data to the prediction model, a maximum execution time calculation unit configured to calculate a maximum execution time of the prediction model on the basis of the first and second execution times acquired by the execution time acquisition unit, and an evaluation unit configured to evaluate the prediction model on the basis of a calculation result from the maximum execution time calculation unit. This configuration allows the information processing device to calculate the maximum execution time of the prediction model and evaluate, in a simple manner, the prediction model on the basis of the calculation result.

An information processing program according to an aspect is an information processing program executed by a computer connected to a control device, the control device including a control operation unit configured to execute a control operation for controlling a control target, and a predicted value acquisition unit configured to acquire a predicted value by inputting, to a prediction model, a process value including one or a plurality of state values among state values that can be referenced by the control operation unit, the information processing program causing the computer to execute generating the prediction model on the basis of a tree learning algorithm, and evaluating the prediction model. The evaluating the prediction model includes acquiring each of first and second execution times that are times taken for outputting the predicted value in response to input of first and second data to the prediction model, calculating a maximum execution time of the prediction model on the basis of the first and second execution times acquired, and evaluating the prediction model on the basis of a calculation result from the maximum execution time calculation unit. This configuration allows the information processing program to calculate the maximum execution time of the prediction model and evaluate, in a simple manner, the prediction model on the basis of the calculation result.

Note that, in the present disclosure, "unit" and "device" do not necessarily mean physical means, and include a configuration in which a function of "unit" and a function of "device" are implemented by software. Further, a function of one "unit" and a function of one "device" may be implemented by two or more physical means or devices, or a function of two or more "units" and a function of two or more "devices" may be implemented by one physical means or device. Furthermore, "unit" and "device" are concepts that can be rephrased as, for example, "means" and "system".

ADVANTAGEOUS EFFECTS OF INVENTION

The prediction system, the information processing device, and the information processing program of the present disclosure allow the prediction model to be evaluated in a simpler manner.

BRIEF DESCRIPTION OF DRAWINGS

Fig. 1 is a diagram schematically illustrating an example of an overall configuration of a prediction system 1 according to an embodiment.
Fig. 2 is a diagram schematically illustrating an application example of prediction system 1 according to the embodiment.
Fig. 3 is a diagram for describing a control system implemented by prediction system 1 according to the embodiment.
Fig. 4 is a diagram schematically illustrating an example of control based on a prediction result from a predictive control system implemented by prediction system 1 according to the embodiment.
Fig. 5 is a flowchart illustrating a processing procedure of processing of generating a prediction model 140 using prediction system 1 according to the embodiment.
Fig. 6 is a diagram for describing a method for training prediction model 140 according to the embodiment.
Fig. 7 is a block diagram illustrating an example of a hardware configuration of a control device 100 that is a component of prediction system 1 according to the embodiment.
Fig. 8 is a block diagram illustrating an example of a hardware configuration of a support device 200 that is a component of prediction system 1 according to the embodiment.
Fig. 9 is a block diagram illustrating an example of a software configuration of control device 100 and support device 200 that are components of prediction system 1 according to the embodiment.
Fig. 10 is a block diagram illustrating an outline of functional modules included in an analysis program 226 illustrated in Fig. 9 according to the embodiment.
Fig. 11 is a diagram for describing a prediction model evaluation unit that evaluates the prediction model according to the embodiment.
Fig. 12 is a diagram for describing a structure of the prediction model according to the embodiment.
Fig. 13 is a conceptual diagram for describing a processing time of the prediction model according to the embodiment.
Fig. 14 is a diagram for describing an execution time, for prediction data, of the prediction model according to the embodiment.
Fig. 15 is a diagram for describing a unit execution time for a unit processing count of the prediction model according to the embodiment.
Fig. 16 is a diagram for describing a method for calculating a maximum execution time of the prediction model according to the embodiment.
Fig. 17 is a conceptual diagram for describing evaluation of the prediction model according to the embodiment.
Fig. 18 is a diagram for describing a flow of processing of evaluating the prediction model according to the embodiment.
Fig. 19 is a diagram for describing an evaluation result screen 500 according to the embodiment.
Fig. 20 is another diagram for describing the evaluation result screen according to the embodiment.
Fig. 21 is a diagram for describing details of evaluation results on a plurality of prediction models according to the embodiment.

DESCRIPTION OF EMBODIMENTS

The embodiment will be described in detail with reference to the drawings. Note that the same or corresponding parts in the drawings are denoted by the same reference numerals to avoid the description from being redundant.

<A. Application example>

First, an example of a case to which the present embodiment is applied will be described.
Main aspects of a control system having a prediction function according to the embodiment will be described. The following description mainly focuses on the prediction function of the control system, so that the entire control system is also referred to as "prediction system".

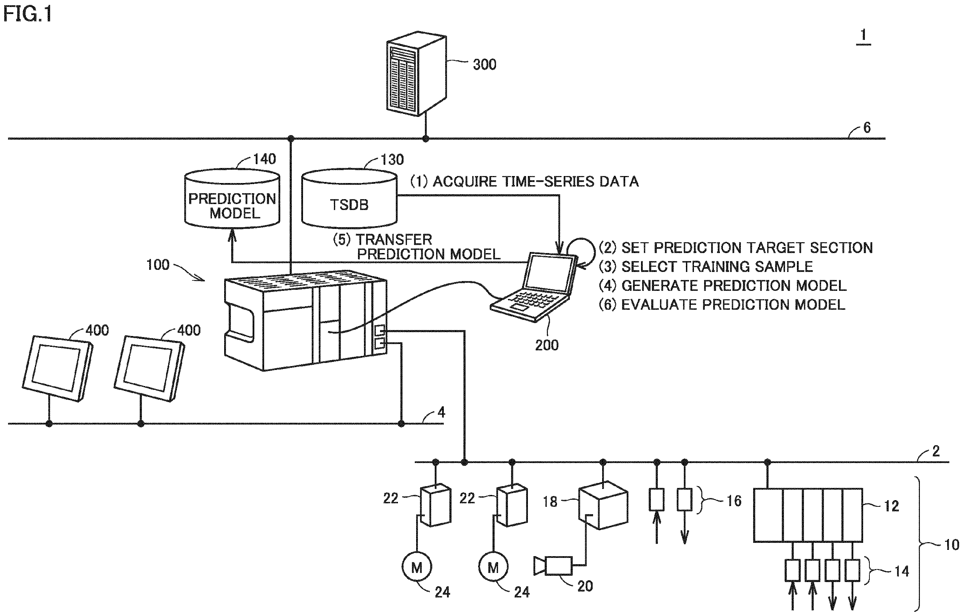

Fig. 1 is a diagram schematically illustrating an example of an overall configuration of a prediction system 1 according to the embodiment. Referring to Fig. 1, prediction system 1 according to the embodiment includes, as main components, a control device 100 that controls a control target and a support device 200 connected to control device 100.
Control device 100 may be implemented as a kind of computer such as a programmable controller (PLC). Control device 100 may be connected to a field device group 10 over a field bus 2 and may be connected to one or a plurality of display devices 400 over a field bus 4. Furthermore, control device 100 may be connected to a host server 300 over a host network 6. Note that host server 300 and display device 400 are optional components, and are not essential components of prediction system 1.
Control device 100 has a control logic (hereinafter, also referred to as "PLC engine") that executes various operations for controlling equipment or machinery. In addition to the PLC engine, control device 100 has a collection function of collecting data (hereinafter, also referred to as "input data") measured by field device group 10 and transferred to control device 100. Furthermore, control device 100 further has a prediction function of predicting future changes with time on the basis of the collected input data.

Specifically, a time series data base (hereinafter, also referred to as "TSDB") 130 deployed on control device 100 provides the collection function, and prediction model 140 deployed on control device 100 provides a monitoring function. Details of TSDB 130 and prediction model 140 will be described later.

It is preferable that an industrial communication protocol be applied to field bus 2 and field bus 4. As such a communication protocol, EtherCAT (registered trademark), EtherNet/IP (registered trademark), DeviceNet (registered trademark), CompoNet (registered trademark), and the like are known.

Field device group 10 includes a device that collects the input data from the control target, or a manufacturing device, a production line, or the like pertaining to control (hereinafter, also collectively referred to as "field"). Possible examples of such a device that collects the input data include an input relay, various sensors, and the like. Field device group 10 further includes a device that applies some action to the field on the basis of a command (hereinafter, also referred to as "output data") generated by control device 100. Possible examples of such a device that applies some action to the field includes an output relay, a contactor, a servo driver, a servomotor, and any other actuator. Field device group 10 exchanges data including the input data and the output data with control device 100 over field bus 2.

In the configuration example illustrated in Fig. 1, field device group 10 includes a remote input/output (I/O) device 12, a relay group 14, an image sensor 18, a camera 20, a servo driver 22, and a servomotor 24.

Remote I/O device 12 includes a communication unit that executes communications over field bus 2, and an input/output unit (hereinafter, also referred to as "I/O unit") that collects the input data and outputs the output data. The input data and the output data are exchanged via such an I/O unit between control device 100 and the field. Fig 1 illustrates an example where digital signals are exchanged as the input data and the output data via relay group 14.

The I/O unit may be directly connected to field bus 2. Fig. 1 illustrates an example where an I/O unit 16 is directly connected to field bus 2.

Image sensor 18 executes image measurement processing such as pattern matching on image data captured by camera 20, and transmits the processing result to control device 100.

Servo driver 22 drives servomotor 24 in accordance with the output data (for example, a position command or the like) from control device 100.

As described above, data is exchanged between control device 100 and field device group 10 over field bus 2, and the exchanged data is updated at very short intervals of several hundred microseconds to several tens of milliseconds. Note that such processing of updating the exchanged data may be referred to as "I/O refresh processing".

Further, display device 400 connected to control device 100 over field bus 4 receives a user operation, transmits a command or the like in response to the user operation to control device 100, and graphically displays an operation result or the like from control device 100.

Host server 300 is connected to control device 100 over host network 6, and exchanges necessary data with control device 100. A general-purpose protocol such as Ethernet (registered trademark) may be applied to host network 6.

Support device 200 is an information processing device (an example of a computer) that aids in preparation necessary for control device 100 to control the control target. Specifically, support device 200 provides a development environment (programming and editing tool, parser, compiler, and the like) for a user program to be executed on control device 100, a setting environment for setting parameters (configuration) of control device 100 and various devices connected to control device 100, a function of transmitting the generated user program to control device 100, a function of correcting or modifying the user program to be executed on control device 100 online, and the like.

Support device 200 according to the embodiment further has a function of aiding in generation and optimization of prediction model 140 deployed on control device 100. That is, support device 200 includes a prediction model generation unit that predetermines prediction model 140. Details of such functions will be described later.

Next, an application example of control device 100 included in prediction system 1 will be described.

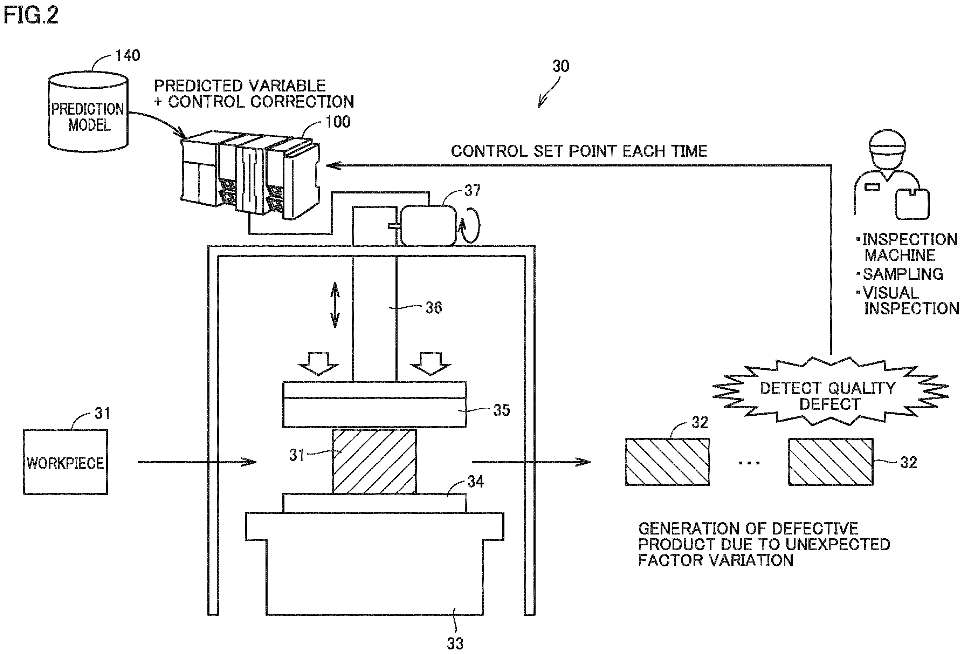

Fig. 2 is a diagram schematically illustrating the application example of prediction system 1 according to the embodiment. Fig. 2 illustrates an example of production equipment including a press machine 30.

Referring to Fig. 2, press machine 30 receives a workpiece 31 and places workpiece 31 thus received on a bed 34 provided on a base 33. Then, workpiece 31 is pressed by a pressing plate 35 provided at the tip of a drive shaft 36 driven by a motor 37 to generate an intermediate product 32.

For press machine 30, it is assumed that a defect may occur in intermediate product 32 due to an unexpected factor variation. It is therefore determined whether or not a defect has occurred in intermediate product 32 by means of inspection with an inspection machine disposed downstream of press machine 30, or by means of visual inspection or sampling inspection by an inspector. If it is determined that a defect has occurred, a set point or the like is adjusted.

As described above, for a typical manufacturing process, it is necessary to adjust the set point each time in order to maintain and improve a non-defective rate of intermediate product 32, but even if the set point is predesigned from various viewpoints, it is difficult to cope with all factor variations.

On the other hand, it is possible to correct, before a defect actually occurs, the control executed by control device 100 by predicting a state (that is, quality after processing) of intermediate product 32 using prediction model 140 according to the embodiment. The fact that such a prediction about the occurrence of unnecessity in advance is available makes it possible to reduce the number of man-hours required for the set point or the like to be adjusted each time and to prevent a defect from occurring in intermediate product 32.

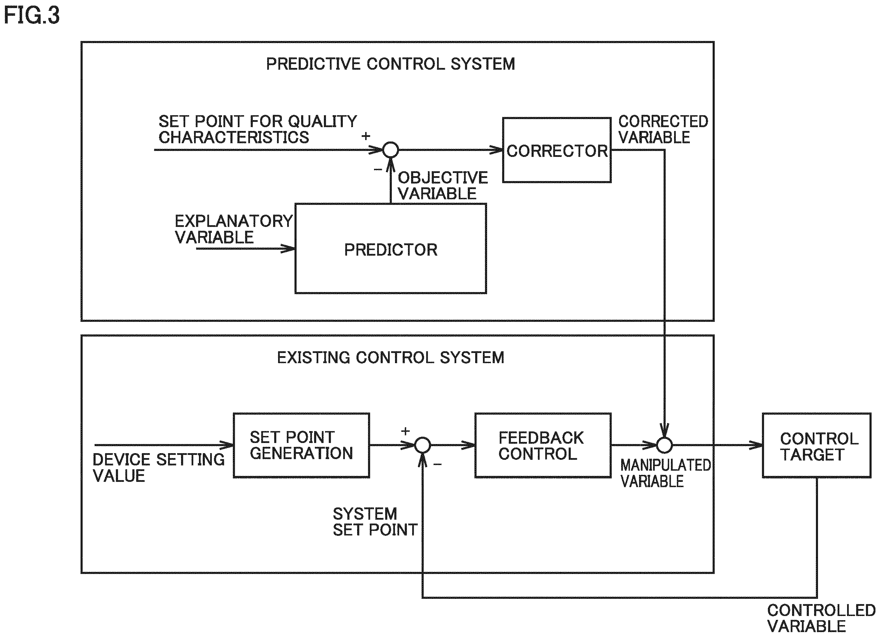

Fig. 3 is a diagram for describing a control system implemented by prediction system 1 according to the embodiment. Referring to Fig. 3, the control target in this example is press machine 30. A device setting value is input to an existing control system to generate the set point. A manipulated value for the control target is set by means of feedback control based on a controlled value of press machine 30 and the set point. Further, a predictive control system is provided for the existing control system. Specifically, a predictor that calculates an objective variable for an explanatory variable is provided. Examples of the predictor include prediction model 140. A corrector calculates a corrected value on the basis of the set point and the objective variable for quality characteristics of press machine 30. The corrected value is added to the manipulated value.

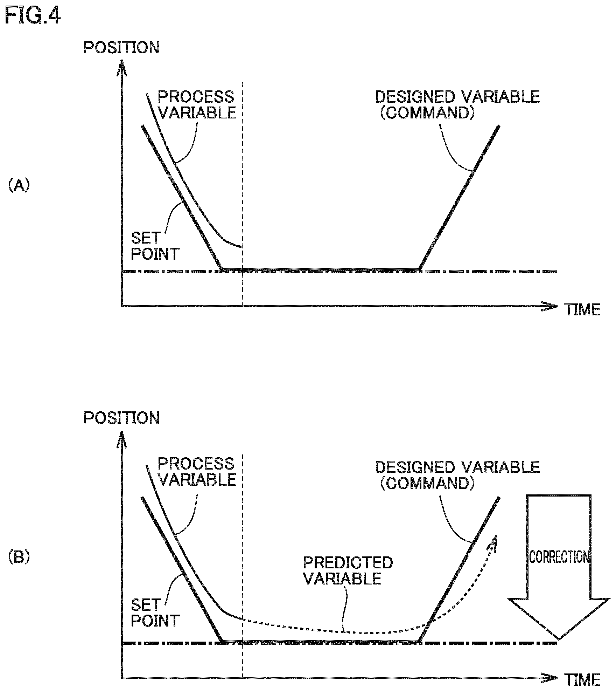

Fig. 4 is a diagram schematically illustrating an example of control based on a prediction result from the predictive control system implemented by prediction system 1 according to the embodiment.

Fig. 4(A) illustrates a designed value (command) of a pressing position of the press machine at a certain time point and an actual pressing position (process value) of press machine 30. The set point indicates a desired thickness of intermediate product 32 after processing.

Referring to Fig. 4(B), at a certain time point, a future pressing position of press machine 30 (predicted value) is calculated on the basis of information up to the time point (which may include the process value), and the manipulated value for press machine 30 is corrected with the corrected value on the basis of the predicted value thus calculated.

For press machine 30 illustrated in Figs. 2 to 4, the pressing position of press machine 30 is predicted, and the controlled value is corrected on the basis of the prediction result, which eliminates the need for an operator to adjust the set point each time in accordance with, for example, variations in hardness of workpiece 31. It is therefore possible to suppress the generation of a defective product due to an unexpected factor variation and to make the quality stable even if there is any variation in workpiece 31.

Data (process value or observed value) used for prediction and data to be predicted may be partially or entirely identical to each other or completely different from each other.

Prediction system 1 according to the embodiment provides a function of generating prediction model 140 in an appropriate manner. Typically, the function of generating prediction model 140 in an appropriate manner may be implemented in support device 200.

<B. Outline of prediction model generation and operation>

Next, an outline of generation and operation of prediction model 140 using prediction system 1 according to the embodiment will be described.

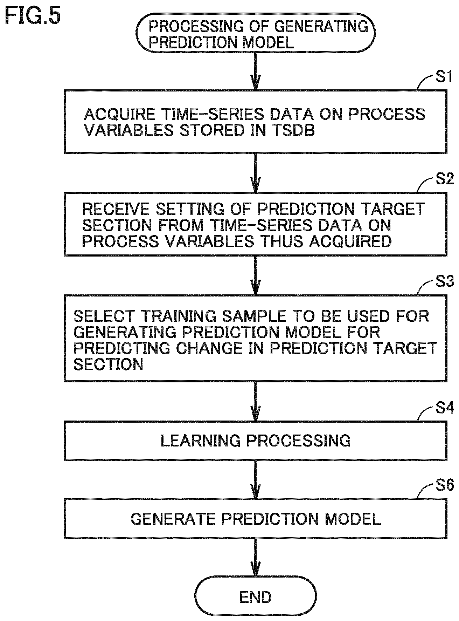

Fig. 5 is a flowchart illustrating a processing procedure of processing of generating prediction model 140 using prediction system 1 according to the embodiment. Typically, a processor 202 of support device 200 executes a program (such as an analysis program 226 and an OS 228) to execute each step in Fig. 5.

Referring to Fig. 5, support device 200 acquires time-series data on process values stored in TSDB 130 (step S1). Subsequently, support device 200 receives a setting of a prediction target section from the time-series data on process values thus acquired (step S2).

Support device 200 selects a training sample to be used for generating a prediction model for predicting a change in the prediction target section set in step S2 (step S3). In step S3, data to be used for training is selected from among a plurality of types of data.

Support device 200 executes machine learning on the basis of the training sample thus selected (step S4).

Support device 200 generates prediction model 140 by means of the machine learning (step S6). Prediction model 140 in this example includes a decision tree. The decision tree is configured to output a pressing position (predicted value) for a feature at a certain time point. As a method for training the decision tree, concept learning system (CLS), iterative dichotomiser 3 (ID3), C4.5, or the like may be used.

Herein, the "sample" means a data string that has a predetermined time length and is used as labeled training data for a predicted value to be output from prediction model 140. Basically, time-series data (raw data) of a prediction target is used as the "sample", but in a case where the prediction target is a feature extracted from the time-series data, the feature may be used. The term "sample" focuses on a processing unit when processing a plurality of pieces of data, and data content included in the sample is not particularly limited.

Herein, data to be referenced to calculate or determine any predicted value is also referred to as "explanatory variable". Any predicted value is calculated or determined using one or a plurality of "explanatory variables". Therefore, the training sample is associated with data that can be a candidate for the "explanatory variable" by any method.

Herein, the "feature" is a term including information included in the time-series data to be processed, and may include, for example, a maximum value, a minimum value, a median value, a mean value, a standard deviation, a variance, and the like for the time-series data to be processed. Note that the "feature" may also include the target time-series data itself.

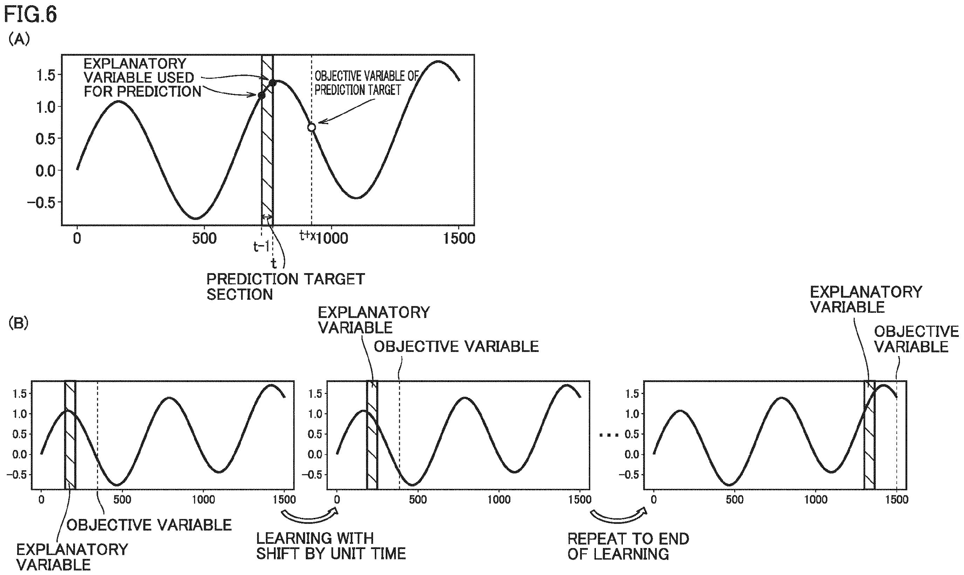

Fig. 6 is a diagram illustrating a method for training prediction model 140 according to the embodiment. As illustrated in Fig. 6(A), the time-series data stored in TSDB 130 is shown. The prediction target section is set for the time-series data, and a predicted value that is an objective variable of the prediction target is estimated for features at two points of times t and t-1 of the prediction target section. As illustrated in Fig. 6(B), a case where learning processing is executed with the time-series data shifted by a unit time is shown.

Deploying, on control device 100, prediction model 140 generated by means of the above-described processing procedure allows the operation as illustrated in Figs. 2 to 4.

<C. Hardware configuration example>

Next, examples of hardware configurations of main devices constituting prediction system 1 according to the embodiment will be described.

(c1: Example of hardware configuration of control device 100)

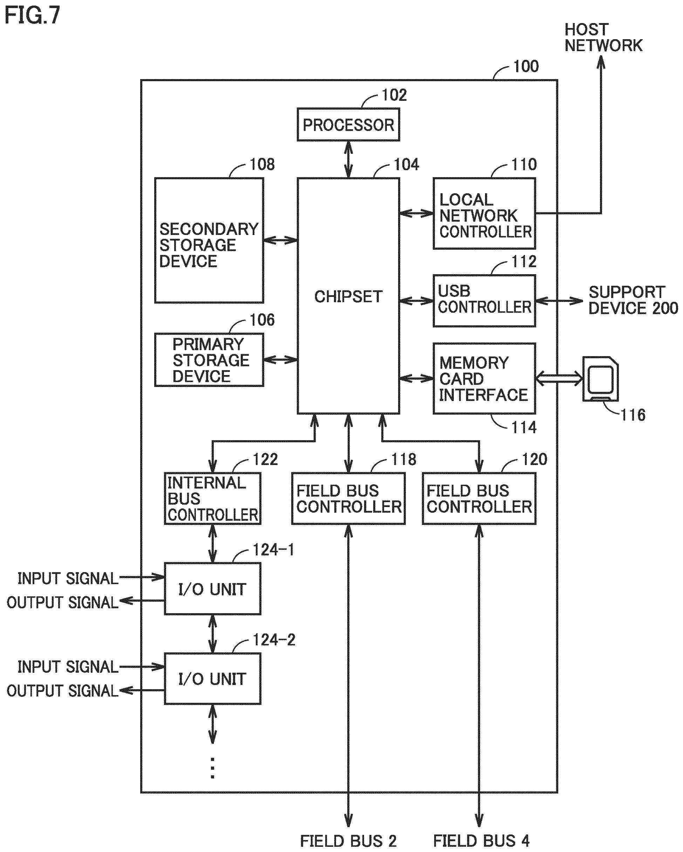

Fig. 7 is a block diagram illustrating an example of a hardware configuration of control device 100 that is a component of prediction system 1 according to the embodiment. Referring to Fig. 7, control device 100 includes a processor 102 such as a central processing unit (CPU) or a micro-processing unit (MPU), a chipset 104, a primary storage device 106, a secondary storage device 108, a host network controller 110, a universal serial bus (USB) controller 112, a memory card interface 114, an internal bus controller 122, field bus controllers 118, 120, and I/O units 124-1, 124-2,

Processor 102 reads various programs stored in secondary storage device 108, loads the programs into primary storage device 106, and executes the programs to implement PLC engine 150 and prediction model 140. Chipset 104 controls data transmission and the like between processor 102 and each component.

Secondary storage device 108 stores a user program to be executed using PLC engine 150 in addition to a system program for implementing PLC engine 150. Furthermore, secondary storage device 108 further stores a program for implementing prediction model 140.

Host network controller 110 controls data exchanges with another device over host network 6. USB controller 112 controls data exchanges with support device 200 over a USB connection.

Memory card interface 114 is configured to receive a memory card 116 in a detachable manner and is capable of writing data to memory card 116 and reading various data (such as the user program or trace data) from memory card 116.

Internal bus controller 122 is an interface that exchanges data with I/O units 124-1, 124-2, ... mounted on control device 100.

Field bus controller 118 controls data exchanges with another device over field bus 2. Similarly, field bus controller 120 controls data exchanges with another device over field bus 4.

Fig. 7 illustrates the configuration example where processor 102 executes a program to provide necessary functions, but some or all of the functions thus provided may be implemented by a dedicated hardware circuit (for example, an application specific integrated circuit (ASIC), a field-programmable gate array (FPGA), or the like). Alternatively, a core part of control device 100 may be implemented by hardware based on a general-purpose architecture (for example, an industrial personal computer based on a general-purpose personal computer). Further, a plurality of operating systems (OSs) having different uses may be executed in parallel using a virtualization technology, and a necessary application may be executed on each OS.

(c2: Example of hardware configuration of support device 200)

As an example, support device 200 according to the embodiment is implemented by a program executed using hardware based on a general-purpose architecture (for example, a general-purpose personal computer).

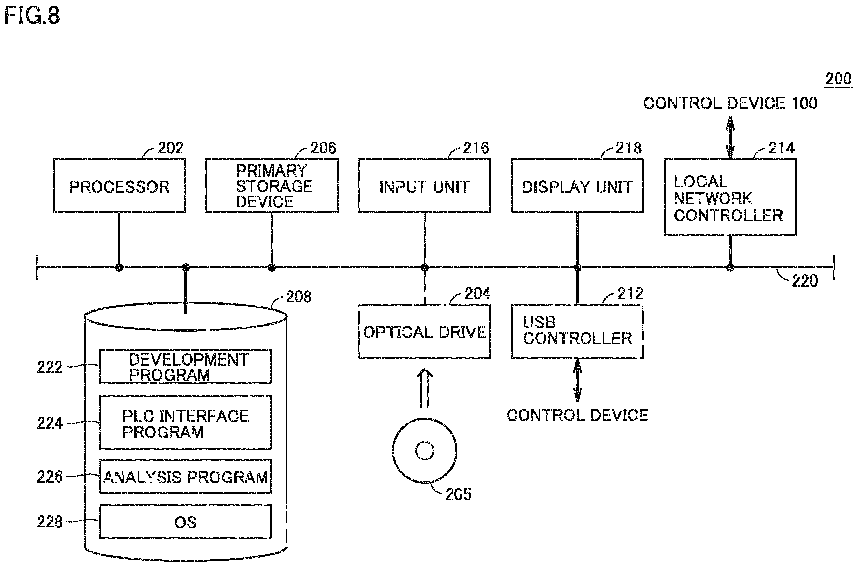

Fig. 8 is a block diagram illustrating an example of a hardware configuration of support device 200 that is a component of prediction system 1 according to the embodiment. Referring to Fig. 8, support device 200 includes processor 202 such as a CPU or an MPU, an optical drive 204, a primary storage device 206, a secondary storage device 208, a USB controller 212, a host network controller 214, an input unit 216, and a display unit 218. Such components are connected over a bus 220.

Processor 202 reads various programs stored in secondary storage device 208, loads the programs into primary storage device 206, and executes the programs to execute various processing including model generation processing as described later.

Secondary storage device 208 includes, for example, a hard disk drive (HDD) or a flash solid state drive (SSD). Secondary storage device 208 typically stores a development program 222 for creating a user program executed on support device 200, debugging the created user program, defining a system configuration, setting various parameters, and the like, a PLC interface program 224 for exchanging data on the prediction function with control device 100, analysis program 226 for allowing the generation of prediction model 140, and OS 228. Secondary storage device 208 may store necessary programs other than the programs illustrated in Fig. 8.

Support device 200 includes optical drive 204 so as to allow a program stored, in a non-transitory manner, in a computer-readable recording medium 205 (for example, an optical recording medium such as a digital versatile disc (DVD)) to be read and installed in secondary storage device 208 or the like.

Various programs executed on support device 200 may be installed via computer-readable recording medium 205, or may be downloaded from any server on a network and then installed. Further, functions provided by support device 200 according to the embodiment may be implemented via some of the modules provided by the OS.

USB controller 212 controls data exchanges with control device 100 over a USB connection. Host network controller 214 controls data exchanges with another device over any network.

Input unit 216 includes a keyboard, a mouse, or the like, and receives a user operation. Display unit 218 includes a display, various indicators, a printer, or the like, and outputs a processing result and the like received from processor 202.

Fig. 8 illustrates the configuration example where processor 202 executes a program to provide necessary functions, but some or all of the functions thus provided may be implemented by a dedicated hardware circuit (for example, an ASIC or an FPGA).

<D. Software configuration example/functional configuration example>

Next, examples of software configurations and functional configurations of control device 100 and support device 200 that are components of prediction system 1 according to the embodiment will be described.

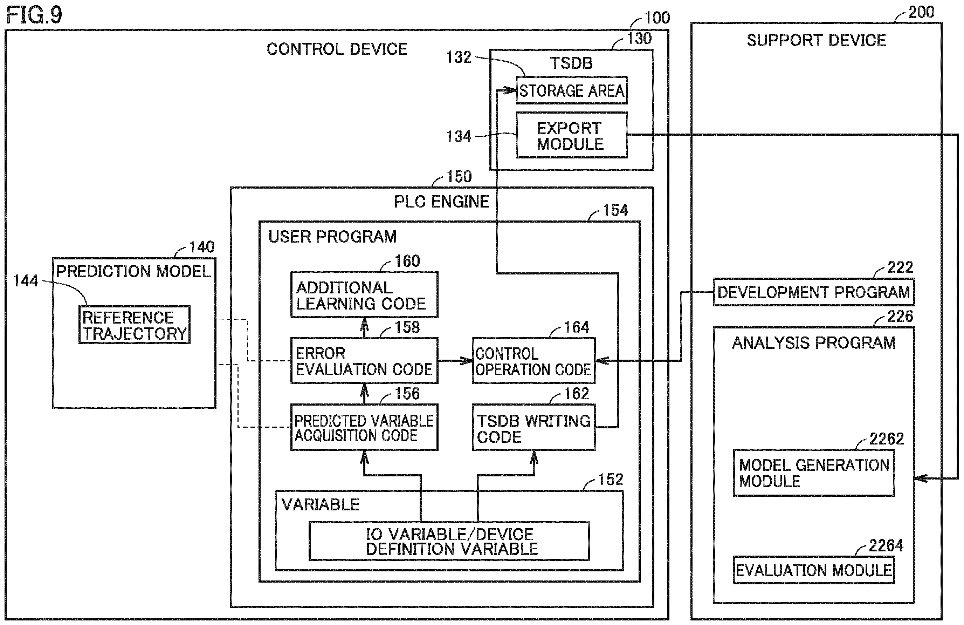

Fig. 9 is a block diagram illustrating examples of software configurations of control device 100 and support device 200 that are components of prediction system 1 according to the embodiment. Referring to Fig. 9, control device 100 includes, as main functional components, TSDB 130 and prediction model 140 in addition to PLC engine 150.

PLC engine 150 sequentially interprets a user program 154 and executes a designated control operation. PLC engine 150 manages a state value collected from the field in the form of a variable 152, and variable 152 is updated at predetermined intervals. PLC engine 150 may be implemented by the system program executed by processor 102 of control device 100.

Herein, the "state value" includes an input value collected from the field, a command value output to the field, and a system state value or an internal value managed inside control device 100. In control device 100 according to the embodiment, the "state value" is referenced in the form of a "variable", so that the term "variable" is used for convenience sake on the assumption that the "variable" includes the "state value" in the following description. Note that the technical scope of the present disclosure is not limited to the configuration where the "state value" is referenced in the form of a "variable".

User program 154 includes a predicted value acquisition code 156, an error evaluation code 158, an additional learning code 160, a TSDB writing code 162, and a control operation code 164.

Predicted value acquisition code 156 implements a predicted value acquisition unit that acquires a predicted value by inputting, to prediction model 140, a process value including one or a plurality of state values among the state values that control operation code 164 can reference. More specifically, predicted value acquisition code 156 includes an instruction to acquire a predicted value by acquiring a necessary process value managed as variable 152 and inputting the process value to prediction model 140.

Error evaluation code 158 includes an instruction to evaluate an error between the predicted value acquired by predicted value acquisition code 156 and a set point.

Additional learning code 160 includes an instruction to additionally train prediction model 140 as necessary in accordance with the error evaluated by error evaluation code 158.

TSDB writing code 162 acquires a predetermined variable among variables managed as variables 152 and writes the variable to a storage area 132 of TSDB 130.

Control operation code 164 implements a control operation unit that executes a control operation for controlling the control target. More specifically, control operation code 164 executes a control operation for controlling the control target, and corrects the set point used for the control operation as necessary in accordance with the error evaluated by error evaluation code 158.

TSDB 130 includes an export module 134 that exports data written to storage area 132 to support device 200 or the like, as necessary.

Prediction model 140 has a reference trajectory 144.

On the other hand, development program 222 and analysis program 226 are installed in support device 200.

Development program 222 generates user program 154 in accordance with a user operation, and transfers user program 154 to control device 100. Further, development program 222 also has a function of correcting, as appropriate, the content of control operation code 164.

Analysis program 226 corresponds to an information processing program for implementing the prediction model generation unit that predetermines prediction model 140. More specifically, analysis program 226 aids in generation of prediction model 140, and includes a model generation module 2262 and an evaluation module 2264.

Model generation module 2262 implements a function necessary for processing of generating prediction model 140.

Evaluation module 2264 evaluates the performance of prediction model 140 of interest.

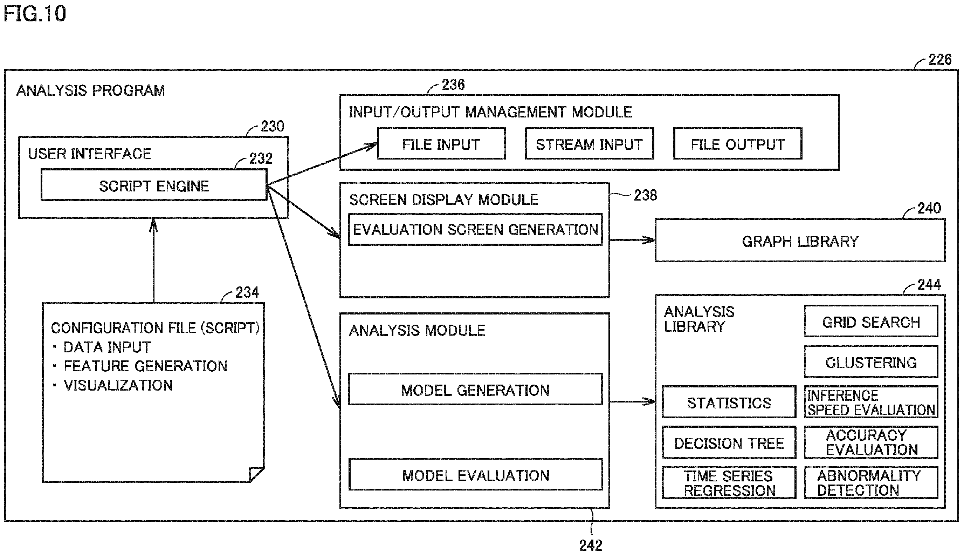

Fig. 10 is a block diagram illustrating an outline of functional modules included in analysis program 226 illustrated in Fig. 9 according to the embodiment. Referring to Fig. 10, analysis program 226 of support device 200 includes, as main functional components, a user interface 230, an input/output management module 236, a screen display module 238, a graph library 240, an analysis module 242, and an analysis library 244.

User interface 230 receives a setting from the user and executes comprehensive processing for providing various types of information to the user. As a specific implementation form, user interface 230 includes a script engine 232, reads a configuration file 234 including a script describing necessary processing, and executes the set processing.

Input/output management module 236 includes a file input function of reading data from a designated file or the like, a stream input function of receiving a data stream, and a file output function of outputting a file including generated data or the like.

Screen display module 238 includes a function of generating a model evaluation screen on the basis of an input prediction model, and a function of displaying an evaluation result in response to a user operation. Necessary processing may be executed with reference to graph library 240.

Analysis module 242 is a module that implements main processing of analysis program 226, and has a model generation function. Each function included in analysis module 242 is implemented by referring to analysis library 244.

Analysis library 244 includes a library for each function included in analysis module 242 to execute processing. More specifically, analysis library 244 may have a statistics function, a decision tree function, a time series regression function, a grid search function, a clustering function, an inference speed evaluation function, an accuracy evaluation function, and an abnormality detection function.

<E. Evaluation of prediction model>

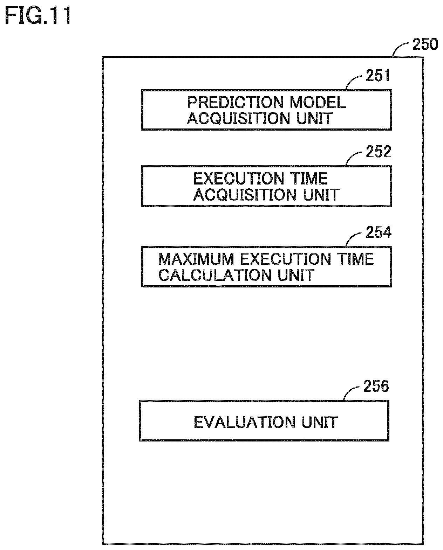

Fig. 11 is a diagram for describing a prediction model evaluation unit that evaluates the prediction model according to the embodiment. Referring to Fig. 11, a prediction model evaluation unit 250 includes a prediction model acquisition unit 251, an execution time acquisition unit 252, a maximum execution time calculation unit 254, and an evaluation unit 256. Prediction model evaluation unit 250 is implemented by evaluation module 2264 as an example.

Execution time acquisition unit 252 acquires each of first and second execution times that are times taken for outputting a predicted value in response to input of first and second data to the prediction model.

Maximum execution time calculation unit 254 calculates a maximum execution time of the prediction model on the basis of the first and second execution times acquired by execution time acquisition unit 252. Maximum execution time calculation unit 254 calculates a unit execution time for a unit processing count on the basis of a difference between the first and second execution times and a difference between a processing count for the first execution time and a processing count for the second execution time, and calculates the maximum execution time on the basis of a maximum processing count and the unit execution time. The prediction model executes a plurality of prediction processes on input data. Maximum execution time calculation unit 254 calculates the processing counts for the first and second execution times on the basis of a sum of respective processing counts of a plurality of prediction processes, and calculates the maximum processing count on the basis of a sum of respective maximum processing counts of the plurality of prediction processes. As an example, the prediction model is generated on the basis of a decision tree learning algorithm using random forest.

Evaluation unit 256 evaluates the prediction model on the basis of the calculation result from maximum execution time calculation unit 254. Evaluation unit 256 evaluates the prediction model on the basis of a comparison between a predetermined control task period and the maximum execution time.

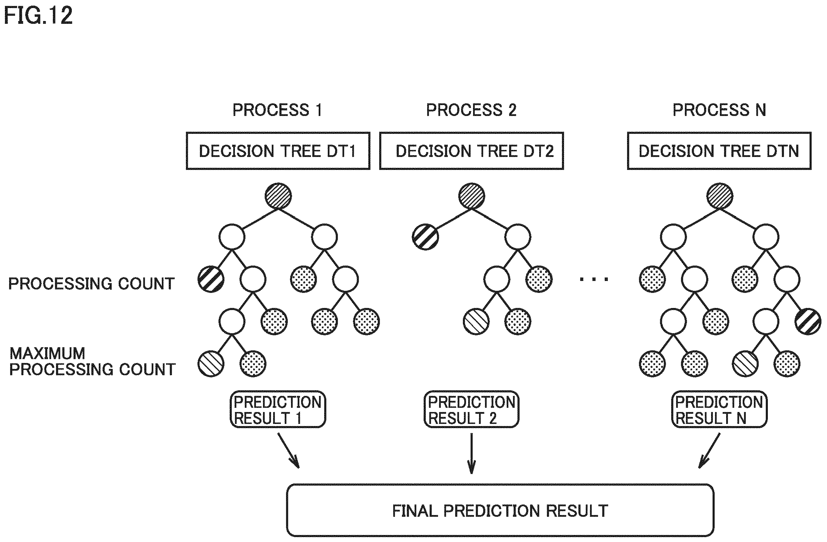

Fig. 12 is a diagram for describing a structure of the prediction model according to the embodiment. Referring to Fig 12, a prediction model based on a decision tree structure using random forest is shown. This example shows, as an example, a case where decision trees DT1 to DTN are provided, a prediction result is acquired from each of decision trees DT1 to DTN, and a final prediction result determined by taking a majority vote is acquired.

The operation processing of the prediction model is search processing of following a link from a root node toward a leaf node. Specifically, it is determined whether or not input data satisfies a branch condition set for the root data, and the search proceeds to the next corresponding node on the basis of the determination result.

Therefore, the processing count differs in a manner that depends on the decision tree structure. In this example, information on the processing count and the maximum processing count for each decision tree is acquired together with the final prediction result.

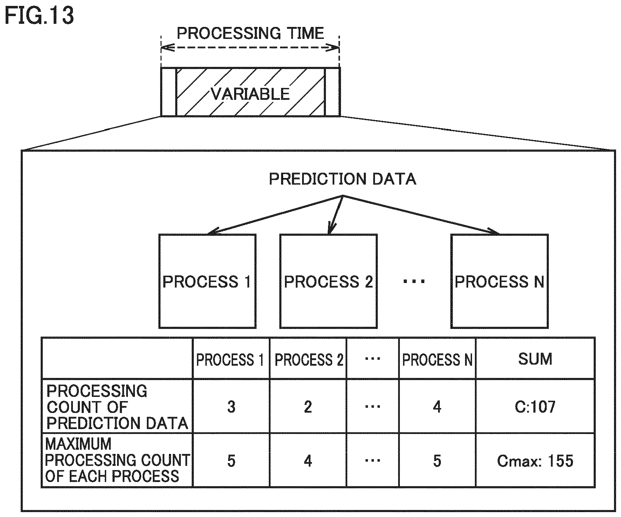

Fig. 13 is a conceptual diagram for describing a processing time of the prediction model according to the embodiment. Referring to Fig. 13, the processing time of the prediction model in this example has a fixed value and a variable value. Specifically, the variable value comes from the processing count. In this respect, a plurality of processes 1 to N for acquiring prediction data are shown. Further, the processing count and the maximum processing count for each process are acquired. Then, the sum of the respective processing counts of the processes is calculated. Further, the sum of the respective maximum processing counts of the processes is calculated.

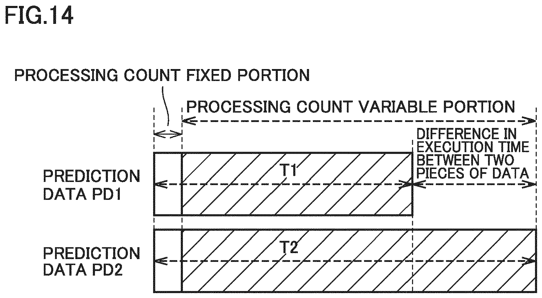

Fig. 14 is a diagram for describing an execution time, for prediction data, of the prediction model according to the embodiment. Referring to Fig. 14, two pieces of prediction data PD1 and PD2 for the prediction model are shown. As illustrated in the drawing, the processing count is separated into a fixed portion and a variable portion. The variable portion of the processing count corresponds to a difference between the execution times for the two pieces of data.

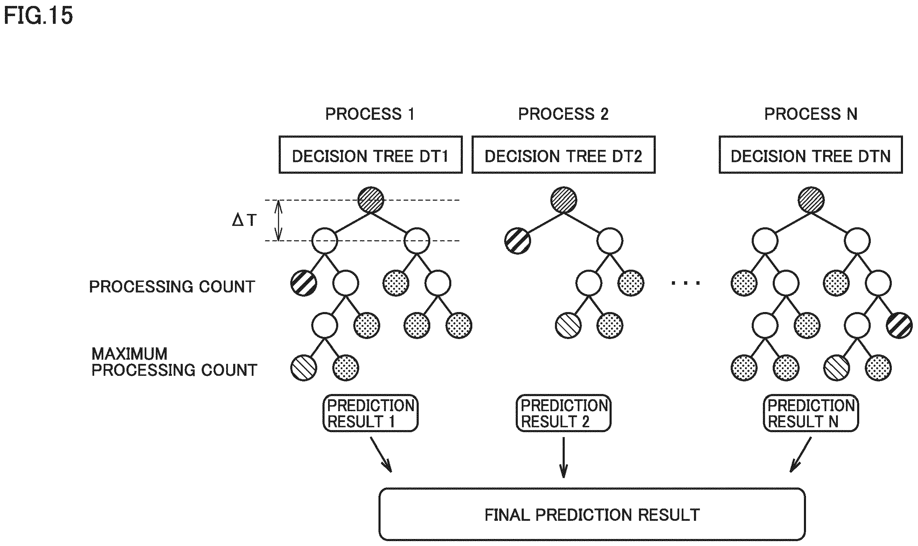

Fig. 15 is a diagram for describing a unit execution time for a unit processing count of the prediction model according to the embodiment. Referring to Fig. 15, a processing time $\Delta T$ for one process in the decision tree of the prediction model is shown.

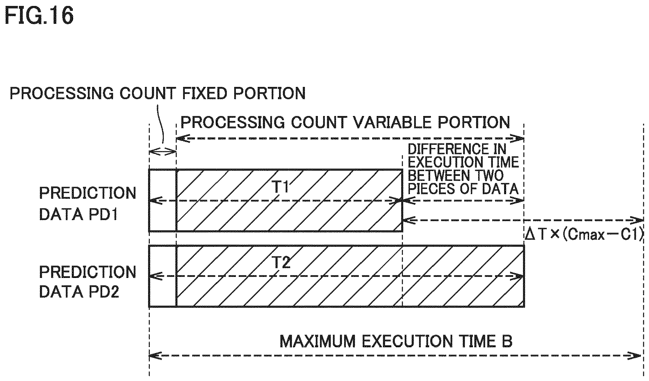

Fig. 16 is a diagram for describing a method for calculating the maximum execution time of the prediction model according to the embodiment. Referring to Fig. 16, $\Delta T$ is calculated on the basis of a difference between an execution time T1 of prediction data PD1 and an execution time T2 of prediction data PD2 and a difference between a processing count C1 of prediction data PD1 and a processing count C2 of prediction data PD2.

$$\Delta T = |T1 - T2|/|C1 - C2|$$

As a result, a maximum execution time B is calculated by the following expression.

$$B = T1 + \Delta T \times (Cmax - C1)$$

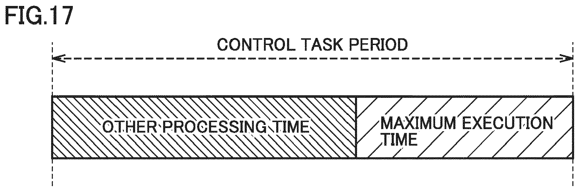

Fig. 17 is a conceptual diagram for describing evaluation of the prediction model according to the embodiment.

Referring to Fig. 17, it is possible to determine whether or not the maximum execution time is within a control task period and to determine that the prediction model is available if the maximum execution time is within the control task period.

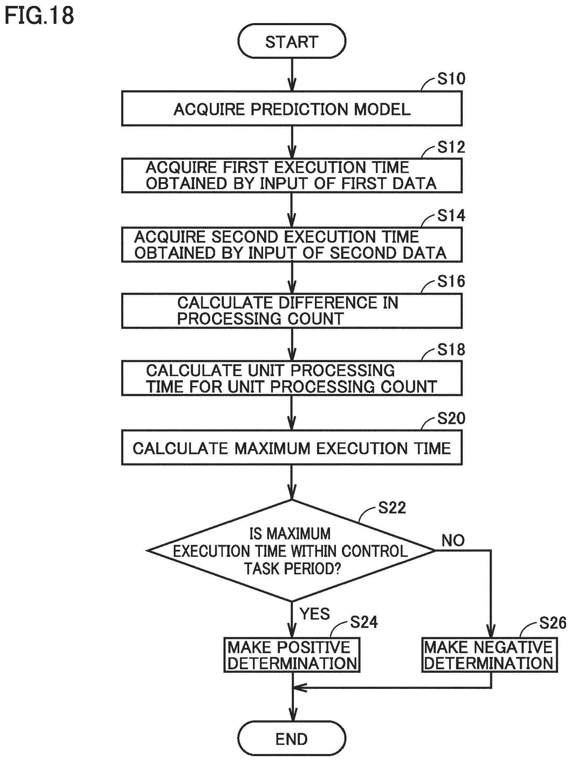

Fig. 18 is a diagram for describing a flow of processing of evaluating the prediction model according to the embodiment.

Referring to Fig. 18, prediction model acquisition unit 251 acquires a prediction model (step S10). Next, execution time acquisition unit 252 acquires first execution time T1 obtained by the input of the first data to the acquired prediction model (step S12).

Next, execution time acquisition unit 252 acquires second execution time T2 obtained by the input of the second data to the acquired prediction model (step S14).

Next, maximum execution time calculation unit 254 calculates a difference in processing count (step S 16). Maximum execution time calculation unit 254 calculates a difference |C1 - C21 between the processing count of prediction data PD1 obtained by the input of the first data and the processing count of prediction data PD2 obtained by the input of the second data.

Next, maximum execution time calculation unit 254 calculates a unit processing time $\Delta T$ for a unit processing count (step S18). Maximum execution time calculation unit 254 calculates a difference |C1 - C21 between the processing count of prediction data PD1 obtained by the input of the first data and the processing count of prediction data PD2 obtained by the input of the second data. Further, an operation Cmax of the maximum processing count of the prediction model is acquired. Maximum execution time calculation unit 254 calculates unit processing time $\Delta T$ for the unit processing count on the basis of a difference between execution time T1 of prediction data PD1 and execution time T2 of prediction data PD2 and a difference between processing count C1 of prediction data PD1 and processing count C2 of prediction data PD2.

Next, maximum execution time calculation unit 254 calculates the maximum execution time (step S20). Maximum execution time calculation unit 254 calculates maximum execution time B (B = T1 + $\Delta T \times$ (Cmax - C1)).

Next, evaluation unit 256 determines whether or not the maximum execution time is within the control task period (step S22). Evaluation unit 256 determines whether or not calculated maximum execution time B is within the control task period. The system can set the control task period to any value.

When determining in step S22 that the maximum execution time is within the control task period (YES in step S22), evaluation unit 256 makes a positive determination (step S24).

On the other hand, when determining in step S22 that the maximum execution time is not within the control task period (NO in step S22), evaluation unit 256 makes a negative determination (step S26).

Then, the processing is brought to an end (END).

In this example, an evaluation result screen is output on the basis of the evaluation result from evaluation unit 256. Specifically, when screen display module 238 is executed, the evaluation result screen is output.

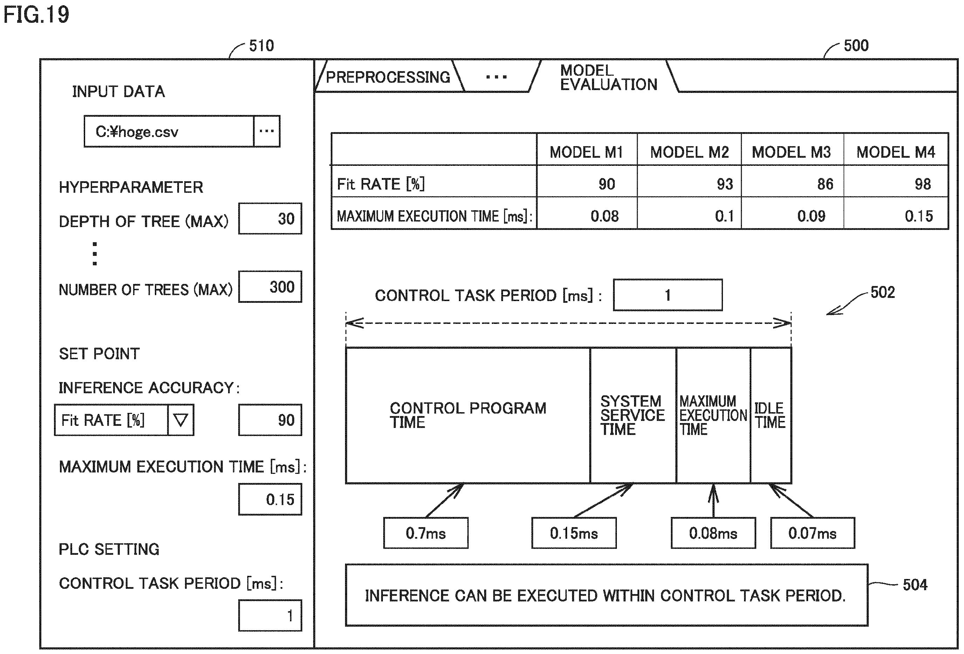

Fig. 19 is a diagram for describing an evaluation result screen 500 according to the embodiment.

Referring to Fig. 19, a tab associated with model evaluation is shown on evaluation result screen 500.

In this example, a graph 502 regarding an execution time of a prediction model M1 that satisfies a condition of a control task period of 1 ms is displayed as an example. Data on other prediction models M2 to M4 is also shown.

Specifically, a control program time of 0.7 ms, a system service time of 0.15 ms, a maximum execution time of 0.08 ms, and an idle time of 0.07 ms are displayed as graph 502.

The maximum execution time is calculated by maximum execution time calculation unit 254 described above.

The control program time and the system service time are fixedly determined.

This example shows a case where the idle time is secured by the calculation of the maximum execution time, so that a message 504 "Inference can be executed within the control task period." is displayed.

Further, an adjustment input field 510 is provided in which an item for inputting a file as input data, an item for setting a hyperparameter, an item for inputting inference accuracy as a set point, and an item for inputting a control task period as a PLC setting are provided.

Building or rebuilding a prediction model is enabled on the basis of data input to adjustment input field 510.

A depth of a tree and the number of trees relate to, for example, a setting value of a tree structure of random forest.

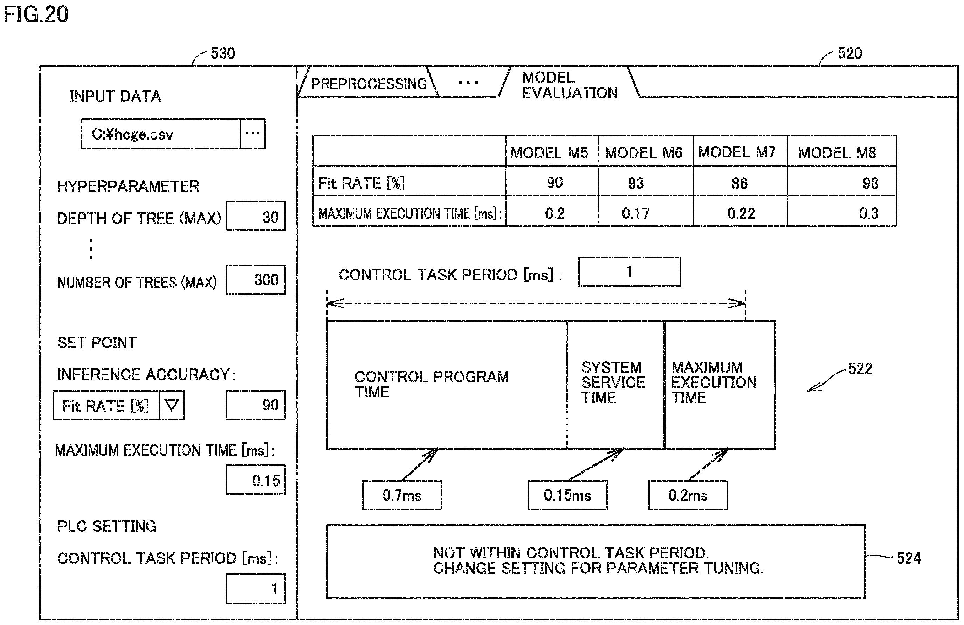

Fig. 20 is another diagram for describing the evaluation result screen according to the embodiment.

Referring to Fig. 20, a tab associated with model evaluation is shown evaluation result screen 520.

In this example, a graph 522 regarding an execution time of a prediction model M5 that satisfies the condition of a control task period of 1 ms is displayed as an example. Data on other prediction models M6 to M8 is also shown.

Specifically, a control program time of 0.7 ms, a system service time of 0.15 ms, and a maximum execution time of 0.2 ms are displayed as graph 522.

The maximum execution time is calculated by maximum execution time calculation unit 254 described above.

The control program time and the system service time are fixedly determined.

This example shows a case where the idle time is not secured even by the calculation of the maximum execution time, so that a message 524 "Not within the control task period. Change setting for parameter tuning." is displayed.

Further, an adjustment input field 530 is provided in which an item for inputting a file as input data, an item for setting a hyperparameter, an item for inputting inference accuracy as a set point, and an item for inputting a control task period as a PLC setting are provided.

Building or rebuilding a prediction model is enabled on the basis of data input to adjustment input field 530.

A depth of a tree and the number of trees relate to, for example, a setting value of a tree structure of random forest. The maximum execution time of the prediction model is adjusted by adjustments to the depth of a tree and the number of trees so as to allow the entire time to fall within the control task period.

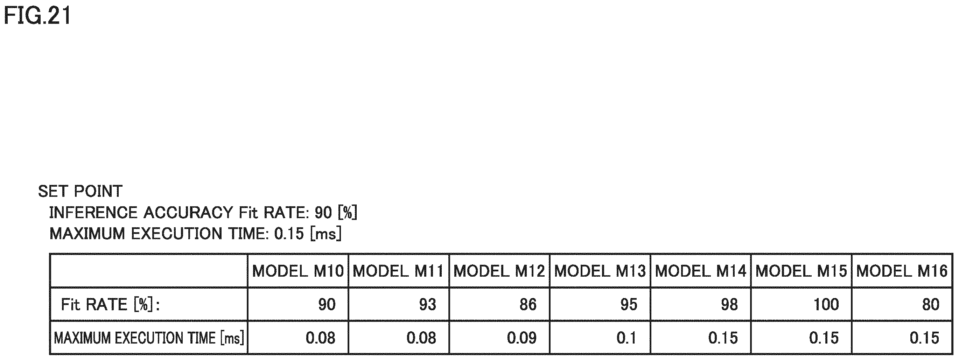

Fig. 21 is a diagram for describing details of evaluation results on a plurality of prediction models according to the embodiment.

Referring to Fig. 21, evaluation results in a case where prediction models M10 to M16 are evaluated are shown here.

A Fit rate and the maximum execution time of each prediction model are shown in tabular form.

The user can check a list of the evaluation results to select a suitable prediction model. Specifically, a prediction model having the shortest maximum execution time may be selected, or a prediction model having the maximum Fit rate may be selected by giving a higher priority to the Fit rate. Alternatively, since the prediction models are also different in data size, a prediction model having the smallest data size may be selected. Alternatively, the prediction model may be selected on the basis of another parameter.

According to this method, it is possible to select a prediction model the most suitable for the prediction system by displaying the list of evaluation results of evaluating the prediction models.

In the above description, the case where a prediction model based on a tree learning algorithm typified by a decision tree is generated has been mainly described, but the present disclosure is not limited to a prediction model based on a decision tree, and can also be applied to a prediction model using another learning algorithm as long as the algorithm has a tree structure.

<F. Appendix>

The present embodiment as described above includes the following technical ideas.

[Configuration 1]

A prediction system (1) includes a control operation unit (164) configured to execute a control operation for controlling a control target, a predicted value acquisition unit (156) configured to acquire a predicted value by inputting, to a prediction model, a process value including one or a plurality of state values among state values that can be referenced by the control operation unit, a prediction model generation unit (2262) configured to generate the prediction model on a basis of a tree learning algorithm, and a prediction model evaluation unit (2264, 250) configured to evaluate the prediction model. The prediction model evaluation unit includes an execution time acquisition unit (252) configured to acquire each of first and second execution times that are times taken for outputting the predicted value in response to input of first and second data to the prediction model, a maximum execution time calculation unit (254) configured to calculate a maximum execution time of the prediction model on the basis of the first and second execution times acquired by the execution time acquisition unit, and an evaluation unit (256) configured to evaluate the prediction model on the basis of a calculation result from the maximum execution time calculation unit.

[Configuration 2]

The maximum execution time calculation unit calculates a unit execution time for a unit processing count on the basis of a difference between the first and second execution times and a difference between a processing count for the first execution time and a processing count for the second execution time, and calculates the maximum execution time on the basis of a maximum processing count and the unit execution time.

[Configuration 3]

The prediction model executes a plurality of prediction processes on input data. The maximum execution time calculation unit calculates the processing counts for the first and second execution times on the basis of a sum of respective processing counts of the plurality of prediction processes, and calculates the maximum processing count on the basis of a sum of respective maximum processing counts of the plurality of prediction processes.

[Configuration 4]

The prediction model is generated on the basis of a decision tree learning algorithm using random forest.

[Configuration 5]

An adjustment unit capable of adjusting a parameter of the prediction model is further included. The prediction model generation unit generates a plurality of the prediction models in accordance with the adjustment to the parameter made by the adjustment unit. The prediction model evaluation unit evaluates each of the plurality of prediction models, and further includes an evaluation result output unit configured to output results of evaluation of the plurality of prediction models.

[Configuration 6]

An information processing device (200) is an information processing device connected to a control device (100), and the control device includes a control operation unit (164) configured to execute a control operation for controlling a control target, and a predicted value acquisition unit (156) configured to acquire a predicted value by inputting, to a prediction model, a process value including one or a plurality of state values among state values that can be referenced by the control operation unit. The information processing device includes a prediction model generation unit (2262) configured to generate the prediction model on the basis of a tree learning algorithm, and a prediction model evaluation unit (2264, 250) configured to evaluate the prediction model. The prediction model evaluation unit includes an execution time acquisition unit (252) configured to acquire each of first and second execution times that are times taken for outputting the predicted value in response to input of first and second data to the prediction model, a maximum execution time calculation unit (254) configured to calculate a maximum execution time of the prediction model on the basis of the first and second execution times acquired by the execution time acquisition unit, and an evaluation unit (256) configured to evaluate the prediction model on the basis of a calculation result from the maximum execution time calculation unit.

[Configuration 7]

An information processing program is an information processing program executed by a computer connected to a control device (100), the control device including a control operation unit (164) configured to execute a control operation for controlling a control target, and a predicted value acquisition unit (156) configured to acquire a predicted value by inputting, to a prediction model, a process value including one or a plurality of state values among state values that can be referenced by the control operation unit, the information processing program causing the computer to execute generating the prediction model on the basis of a tree learning algorithm, and evaluating the prediction model. The evaluating the prediction model includes acquiring each of first and second execution times that are times taken for outputting the predicted value in response to input of first and second data to the prediction model (S12, S14), calculating a maximum execution time of the prediction model on the basis of the first and second execution times acquired (S20), and evaluating the prediction model on the basis of a calculation result from the maximum execution time calculation unit (S24, S26).

<G. Advantages>

The prediction system according to the embodiment allows a prediction model to be evaluated in a simple manner, so that a prediction model suitable for actual operation can be easily generated.

It should be understood that the embodiment disclosed herein is illustrative in all respects and not restrictive. The scope of the present disclosure is defined by the claims rather than the above description, and the present disclosure is intended to include the claims, equivalents of the claims, and all modifications within the scope.

REFERENCE SIGNS LIST

1: prediction system, 2, 4: field bus, 6: host network, 10: field device group, 14: relay group, 100: control device, 102, 202: processor, 104: chipset, 106, 206: primary storage device, 108, 208: secondary storage device, 110, 214: host network controller, 112, 212: controller, 114: memory card interface, 116: memory card, 118, 120: field bus controller, 122: internal bus controller, 132: storage area, 134: export module, 140: prediction model, 144: reference trajectory, 150: engine, 152: variable, 154: user program, 156: predicted value acquisition code, 158: error evaluation code, 160: additional learning code, 162: writing code, 164: control operation code, 200: support device, 204: optical drive, 205: recording medium, 216: input unit, 218: display unit, 220: bus, 222: development program, 224: interface program, 226: analysis program, 230: user interface, 232: script engine, 234: configuration file, 236: input/output management module, 238: screen display module, 240: graph library, 242: analysis module, 244: analysis library, 250: prediction model evaluation unit, 300: host server, 2262: model generation module, 2264: evaluation module

**Claims**

1. A prediction system comprising:

   a control operation unit configured to execute a control operation for controlling a control target;
   a predicted value acquisition unit configured to acquire a predicted value by inputting, to a prediction model, a process value including one or a plurality of state values among state values that can be referenced by the control operation unit;
   a prediction model generation unit configured to generate the prediction model on a basis of a tree learning algorithm; and
   a prediction model evaluation unit configured to evaluate the prediction model,
   wherein the prediction model evaluation unit includes:

   an execution time acquisition unit configured to acquire each of first and second execution times that are times taken for outputting the predicted value in response to input of first and second data to the prediction model;
   a maximum execution time calculation unit configured to calculate a maximum execution time of the prediction model on a basis of the first and second execution times acquired by the execution time acquisition unit; and
   an evaluation unit configured to evaluate the prediction model on a basis of a calculation result from the maximum execution time calculation unit.

2. The prediction system according to claim 1, wherein the maximum execution time calculation unit calculates a unit execution time for a unit processing count on a basis of a difference between the first and second execution times and a difference between a processing count for the first execution time and a processing count for the second execution time, and calculates the maximum execution time on a basis of a maximum processing count and the unit execution time.

3. The prediction system according to claim 2, wherein

   the prediction model executes a plurality of prediction processes on input data, and
   the maximum execution time calculation unit calculates the processing counts for the first and second execution times on a basis of a sum of respective processing counts of the plurality of prediction processes, and calculates the maximum processing count on a basis of a sum of respective maximum processing counts of the plurality of prediction processes.

4. The prediction system according to claim 1, wherein the prediction model is generated on a basis of a decision tree learning algorithm using random forest.

5. The prediction system according to claim 1, wherein the evaluation unit evaluates the prediction model on a basis of a comparison between a predetermined control task period and the maximum execution time.

6. The prediction system according to claim 1, further comprising an adjustment unit capable of adjusting a parameter of the prediction model,

   wherein the prediction model generation unit generates a plurality of the prediction models in accordance with the adjustment to the parameter made by the adjustment unit, and
   the prediction model evaluation unit evaluates each of the plurality of prediction models, and further includes an evaluation result output unit configured to output results of evaluation of the plurality of prediction models.

7. An information processing device connected to a control device, the control device including a control operation unit configured to execute a control operation for controlling a control target, and a predicted value acquisition unit configured to acquire a predicted value by inputting, to a prediction model, a process value including one or a plurality of state values among state values that can be referenced by the control operation unit, the information processing device comprising:

   a prediction model generation unit configured to generate the prediction model on a basis of a tree learning algorithm; and
   a prediction model evaluation unit configured to evaluate the prediction model,
wherein the prediction model evaluation unit includes:

an execution time acquisition unit configured to acquire each of first and second execution times that are times taken for outputting the predicted value in response to input of first and second data to the prediction model;
a maximum execution time calculation unit configured to calculate a maximum execution time of the prediction model on a basis of the first and second execution times acquired by the execution time acquisition unit; and
an evaluation unit configured to evaluate the prediction model on a basis of a calculation result from the maximum execution time calculation unit.

8. An information processing program executed by a computer connected to a control device, the control device including a control operation unit configured to execute a control operation for controlling a control target, and a predicted value acquisition unit configured to acquire a predicted value by inputting, to a prediction model, a process value including one or a plurality of state values among state values that can be referenced by the control operation unit, the information processing program causing the computer to execute:

generating the prediction model on a basis of a tree learning algorithm; and
evaluating the prediction model,
wherein the evaluating the prediction model includes:

acquiring each of first and second execution times that are times taken for outputting the predicted value in response to input of first and second data to the prediction model;
calculating a maximum execution time of the prediction model on a basis of the first and second execution times acquired; and
evaluating the prediction model on a basis of a calculation result of the maximum execution time.

FIG.1

EP 4 361 742 A1

**FIG.2**

EP 4 361 742 A1

FIG.3

PREDICTIVE CONTROL SYSTEM

SET POINT FOR QUALITY
CHARACTERISTICS        +

CORRECTED
VARIABLE

CORRECTOR

−  OBJECTIVE
VARIABLE

EXPLANATORY
VARIABLE

PREDICTOR

EXISTING CONTROL SYSTEM

DEVICE SETTING
VALUE

SET POINT
GENERATION

+

−

FEEDBACK
CONTROL

MANIPULATED
VARIABLE

CONTROL
TARGET

SYSTEM
SET POINT

CONTROLLED
VARIABLE

EP 4 361 742 A1

EP 4 361 742 A1

## FIG.4

(A)

POSITION

PROCESS VARIABLE

DESIGNED VARIABLE (COMMAND)

SET POINT

TIME

(B)

POSITION

PROCESS VARIABLE

DESIGNED VARIABLE (COMMAND)

PREDICTED VARIABLE

SET POINT

CORRECTION

TIME

18

FIG.5

```
   ( PROCESSING OF GENERATING )
   ( PREDICTION MODEL )
              │
              ▼                                    S1
   ┌─────────────────────────────────────┐
   │ ACQUIRE TIME-SERIES DATA ON PROCESS │
   │ VARIABLES STORED IN TSDB            │
   └─────────────────────────────────────┘
              │
              ▼                                    S2
   ┌─────────────────────────────────────┐
   │ RECEIVE SETTING OF PREDICTION TARGET│
   │ SECTION FROM TIME-SERIES DATA ON    │
   │ PROCESS VARIABLES THUS ACQUIRED     │
   └─────────────────────────────────────┘
              │
              ▼                                    S3
   ┌─────────────────────────────────────┐
   │ SELECT TRAINING SAMPLE TO BE USED FOR│
   │ GENERATING PREDICTION MODEL FOR     │
   │ PREDICTING CHANGE IN PREDICTION TARGET│
   │ SECTION                             │
   └─────────────────────────────────────┘
              │
              ▼                                    S4
   ┌─────────────────────────────────────┐
   │        LEARNING PROCESSING          │
   └─────────────────────────────────────┘
              │
              ▼                                    S6
   ┌─────────────────────────────────────┐
   │      GENERATE PREDICTION MODEL      │
   └─────────────────────────────────────┘
              │
              ▼
          (  END  )
```

# FIG.6

(A)

(B)

EP 4 361 742 A1

FIG.7

FIG.8

200

CONTROL DEVICE 100

202 PROCESSOR

206 PRIMARY STORAGE DEVICE

216 INPUT UNIT

218 DISPLAY UNIT

214 LOCAL NETWORK CONTROLLER

220

208

222 DEVELOPMENT PROGRAM

224 PLC INTERFACE PROGRAM

226 ANALYSIS PROGRAM

228 OS

204 OPTICAL DRIVE

205

212 USB CONTROLLER

CONTROL DEVICE

EP 4 361 742 A1

FIG.9

FIG.10

ANALYSIS PROGRAM — 226

USER INTERFACE — 230
- SCRIPT ENGINE — 232

CONFIGURATION FILE (SCRIPT) — 234
- DATA INPUT
- FEATURE GENERATION
- VISUALIZATION

INPUT/OUTPUT MANAGEMENT MODULE — 236
- FILE INPUT
- STREAM INPUT
- FILE OUTPUT

SCREEN DISPLAY MODULE — 238
- EVALUATION SCREEN GENERATION

GRAPH LIBRARY — 240

ANALYSIS MODULE — 242
- MODEL GENERATION
- MODEL EVALUATION

ANALYSIS LIBRARY — 244
- GRID SEARCH
- CLUSTERING
- STATISTICS
- INFERENCE SPEED EVALUATION
- DECISION TREE
- ACCURACY EVALUATION
- TIME SERIES REGRESSION
- ABNORMALITY DETECTION

EP 4 361 742 A1

FIG.11

250

251

PREDICTION MODEL
ACQUISITION UNIT

252

EXECUTION TIME
ACQUISITION UNIT

254

MAXIMUM EXECUTION TIME
CALCULATION UNIT

256

EVALUATION UNIT

FIG.12

PROCESS 1        PROCESS 2        PROCESS N

| DECISION TREE DT1 | DECISION TREE DT2 | DECISION TREE DTN |

PROCESSING COUNT

MAXIMUM
PROCESSING COUNT

· · ·

PREDICTION
RESULT 1

PREDICTION
RESULT 2

PREDICTION
RESULT N

FINAL PREDICTION RESULT

EP 4 361 742 A1

FIG.13

FIG.14

PROCESSING COUNT FIXED PORTION

PROCESSING COUNT VARIABLE PORTION

DIFFERENCE IN
EXECUTION TIME
BETWEEN TWO
PIECES OF DATA

PREDICTION
DATA PD1

T1

PREDICTION
DATA PD2

T2

FIG.15

PROCESS 1

DECISION TREE DT1

PROCESS 2

DECISION TREE DT2

PROCESS N

DECISION TREE DTN

$\Delta T$

PROCESSING COUNT

MAXIMUM
PROCESSING COUNT

PREDICTION
RESULT 1

PREDICTION
RESULT 2

PREDICTION
RESULT N

FINAL PREDICTION RESULT

FIG.16

PROCESSING COUNT FIXED PORTION

PROCESSING COUNT VARIABLE PORTION

DIFFERENCE IN EXECUTION TIME BETWEEN TWO PIECES OF DATA

PREDICTION DATA PD1

T1

PREDICTION DATA PD2

T2

$\Delta T \times (C_{max} - C_1)$

MAXIMUM EXECUTION TIME B

FIG.17

CONTROL TASK PERIOD

| OTHER PROCESSING TIME | MAXIMUM EXECUTION TIME |

FIG.18

```
                    ( START )
                        │
                        ▼                          S10
      ┌──────────────────────────────────┐
      │      ACQUIRE PREDICTION MODEL      │
      └──────────────────────────────────┘
                        │
                        ▼                          S12
      ┌──────────────────────────────────┐
      │       ACQUIRE FIRST EXECUTION TIME │
      │    OBTAINED BY INPUT OF FIRST DATA │
      └──────────────────────────────────┘
                        │
                        ▼                          S14
      ┌──────────────────────────────────┐
      │     ACQUIRE SECOND EXECUTION TIME  │
      │  OBTAINED BY INPUT OF SECOND DATA  │
      └──────────────────────────────────┘
                        │
                        ▼                          S16
      ┌──────────────────────────────────┐
      │       CALCULATE DIFFERENCE IN      │
      │        PROCESSING COUNT            │
      └──────────────────────────────────┘
                        │
                        ▼                          S18
      ┌──────────────────────────────────┐
      │       CALCULATE UNIT PROCESSING    │
      │   TIME FOR UNIT PROCESSING COUNT   │
      └──────────────────────────────────┘
                        │
                        ▼                          S20
      ┌──────────────────────────────────┐
      │    CALCULATE MAXIMUM EXECUTION TIME│
      └──────────────────────────────────┘
                        │
                        ▼                          S22
```

IS MAXIMUM EXECUTION TIME WITHIN CONTROL TASK PERIOD?

NO

YES

S24

MAKE POSITIVE DETERMINATION

S26

MAKE NEGATIVE DETERMINATION

( END )

## FIG.19

INPUT DATA — 510

C:¥hoge.csv   ...

HYPERPARAMETER

DEPTH OF TREE (MAX)  [ 30 ]

:

NUMBER OF TREES (MAX)  [ 300 ]

SET POINT

INFERENCE ACCURACY:

[ Fit RATE [%]  ▽ ]  [ 90 ]

MAXIMUM EXECUTION TIME [ms]:

[ 0.15 ]

PLC SETTING

CONTROL TASK PERIOD [ms]:

[ 1 ]

— 500

| | PREPROCESSING ... | MODEL EVALUATION | | |
|---|---|---|---|---|

| | MODEL M1 | MODEL M2 | MODEL M3 | MODEL M4 |
|---|---|---|---|---|
| Fit RATE [%] | 90 | 93 | 86 | 98 |
| MAXIMUM EXECUTION TIME [ms]: | 0.08 | 0.1 | 0.09 | 0.15 |

CONTROL TASK PERIOD [ms] :  [ 1 ]   — 502

| CONTROL PROGRAM TIME | SYSTEM SERVICE TIME | MAXIMUM EXECUTION TIME | IDLE TIME |
|---|---|---|---|
| 0.7ms | 0.15ms | 0.08ms | 0.07ms |

INFERENCE CAN BE EXECUTED WITHIN CONTROL TASK PERIOD.  — 504

EP 4 361 742 A1

# FIG.20

**530**

**INPUT DATA**

C:¥hoge.csv  [ ... ]

**HYPERPARAMETER**

DEPTH OF TREE (MAX)  [ 30 ]

⋮

NUMBER OF TREES (MAX)  [ 300 ]

**SET POINT**

INFERENCE ACCURACY:

[ Fit RATE [%] ▽ ]  [ 90 ]

MAXIMUM EXECUTION TIME [ms]:

[ 0.15 ]

**PLC SETTING**

CONTROL TASK PERIOD [ms]:

[ 1 ]

**520**

PREPROCESSING \ ... / MODEL EVALUATION

|  | MODEL M5 | MODEL M6 | MODEL M7 | MODEL M8 |
|---|---|---|---|---|
| Fit RATE [%] | 90 | 93 | 86 | 98 |
| MAXIMUM EXECUTION TIME [ms]: | 0.2 | 0.17 | 0.22 | 0.3 |

CONTROL TASK PERIOD [ms]:  [ 1 ]

| CONTROL PROGRAM TIME | SYSTEM SERVICE TIME | MAXIMUM EXECUTION TIME |

**522**

0.7ms     0.15ms     0.2ms

NOT WITHIN CONTROL TASK PERIOD.
CHANGE SETTING FOR PARAMETER TUNING.

**524**

EP 4 361 742 A1

FIG.21

EP 4 361 742 A1

SET POINT
  INFERENCE ACCURACY Fit RATE: 90 [%]
  MAXIMUM EXECUTION TIME: 0.15 [ms]

| | MODEL M10 | MODEL M11 | MODEL M12 | MODEL M13 | MODEL M14 | MODEL M15 | MODEL M16 |
|---|---|---|---|---|---|---|---|
| Fit RATE [%]: | 90 | 93 | 86 | 95 | 98 | 100 | 80 |
| MAXIMUM EXECUTION TIME [ms] | 0.08 | 0.08 | 0.09 | 0.1 | 0.15 | 0.15 | 0.15 |

<table>
<tr><td colspan="2" align="center">**INTERNATIONAL SEARCH REPORT**</td><td colspan="2">International application No.<br><br>**PCT/JP2022/012260**</td></tr>
</table>

**A.  CLASSIFICATION OF SUBJECT MATTER**

*G05B 19/05*(2006.01)i
FI:   G05B19/05 D

According to International Patent Classification (IPC) or to both national classification and IPC

**B.  FIELDS SEARCHED**

Minimum documentation searched (classification system followed by classification symbols)

G05B19/05

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2020-135758 A (OMRON CORP.) 31 August 2020 (2020-08-31)<br>    paragraphs [0163]-[0174] | 1-8 |
| A | JP 2021-82139 A (OMRON CORP.) 27 May 2021 (2021-05-27)<br>    paragraph [0039] | 1-8 |
| A | JP 2012-194669 A (OMRON CORP.) 11 October 2012 (2012-10-11)<br>    entire text, all drawings | 1-8 |
| A | US 2021/0097077 A1 (THE TRAVELERS INDEMNITY CO.) 01 April 2021 (2021-04-01)<br>    entire text, all drawings | 1-8 |

☐ Further documents are listed in the continuation of Box C.       ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>**02 May 2022** | Date of mailing of the international search report<br><br>**17 May 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
**Information on patent family members**

International application No.

**PCT/JP2022/012260**

| Patent document cited in search report | | | Publication date (day/month/year) | Patent family member(s) | | | Publication date (day/month/year) |
|---|---|---|---|---|---|---|---|
| JP | 2020-135758 | A | 31 August 2020 | US 2021/0325838 A1 paragraphs [0212]-[0223] WO 2020/175418 A1 CN 112534363 A | | | |
| JP | 2021-82139 | A | 27 May 2021 | US 2021/0157285 A1 paragraph [0046] EP 3825928 A1 CN 112824987 A | | | |
| JP | 2012-194669 | A | 11 October 2012 | US 2012/0239978 A1 entire text, all drawings WO 2012/124134 A1 EP 2533114 A1 CN 102792235 A | | | |
| US | 2021/0097077 | A1 | 01 April 2021 | (Family: none) | | | |

Form PCT/ISA/210 (patent family annex) (January 2015)

**REFERENCES CITED IN THE DESCRIPTION**

**Patent documents cited in the description**

- JP 2012194669 A